# EUROPEAN PATENT SPECIFICATION

(11) **EP 2 594 869 B1**
(45) Date of publication and mention of the grant of the patent: **30.09.2020**
(21) Application number: 12192345.2
(22) Date of filing: 13.11.2012
(51) Int. Cl.: F25B 13/00, F25B 41/00

(54) **Air conditioner**
Klimaanlage
Climatiseur

(30) Priority: 18.11.2011 KR 20110120899
(43) Date of publication of application: 22.05.2013
(73) Proprietor: LG ELECTRONICS INC., Yeongdeungpo-gu Seoul 150-721 (KR)
(72) Inventor: Lee, Juhyoung, 153-802 Seoul (KR); Bae, Seongwon, 153-802 Seoul (KR)
(74) Representative: Vossius & Partner Patentanwälte Rechtsanwälte mbB

(56) References cited:
- EP-A1- 1 533 154
- EP-A2- 1 693 632
- EP-A2- 2 031 314
- JP-A- 11 183 075
- JP-A- 2003 139 442
- JP-A- 2005 262 248

## Description

This relates to an air conditioner.

Air conditioners maintain indoor air at predetermined states according to desired purposes and preferences. For example, air conditioners may be used to keep indoor air cool in summer and warm in winter. In addition, air conditioners may adjust the humidity of indoor air to provide a pleasant and clean environment.

Indoor air may be cooled or heated by an air conditioner depending on how the air conditioner is operated in a refrigeration cycle. That is, the direction of a refrigerant flowing in refrigeration cycle may be varied based on whether cooling operation or a heating operation is selected.

A refrigeration cycle may include a compressor, an outdoor heat exchanger, an expansion device, and an indoor heat exchanger. In cooling mode, a refrigerant discharged from the compressor is condensed by the outdoor heat exchanger and is expanded (decompressed) by the expansion device. Then, the refrigerant is evaporated in the indoor heat exchanger and is guided back to the compressor. Document JP-A-2005 262248 discloses an air conditioner according to the preamble of claim 1.

In heating mode, the refrigerant discharged from the compressor is condensed by the indoor heat exchanger and is expanded by the expansion device. Then, the refrigerant is evaporated in the outdoor heat exchanger and guided back to the compressor.

The invention provides an air conditioner having the features of claim 1.

The air conditioner may further comprise a plurality of connectors provided between the condenser and the evaporator, wherein refrigerant tubes connecting the evaporator and the plurality of connectors are combination tubes in which and aluminum tube and a copper tube are coupled.

The air conditioner may further comprise a service valve that guides refrigerant from the expansion device to the evaporator or that guides refrigerant from the evaporator to the compressor; and a copper tube connected between the service valve and one of the plurality of connectors.

One of the plurality of refrigerant tubes may extend between the condenser and the expansion device.

The refrigerant tube extending between the condenser and the expansion device may be a combination tube.

The air conditioner may further comprise a refrigerant injector that injects refrigerant into the plurality of refrigerant tubes.

The refrigerant injector may be provided at the copper tube of the combination tube.

The air conditioner may further comprise a distributor provided at the condenser or the evaporator to distribute refrigerant to the corresponding at least one heat exchange tube, wherein the distributor is formed of an aluminum material.

The embodiments will be described in detail with reference to the following drawings in which like reference numerals refer to like elements wherein:
Fig. 1 is a schematic view of a refrigerant cycle of an air conditioner according to the present invention.
Fig. 2 is a sectional view of a coupled state of an aluminum tube and a copper tube according to the present invention.
Fig. 3 is a sectional view of a coupled state of an aluminum tube and a copper tube according to an embodiment which does not form part of the present invention.
Fig. 4 is a sectional view of a coupled state of an aluminum tube and a copper tube according to an embodiment, which does not form part of the present invention.
Fig. 5 is a sectional view of a coupled state of an aluminum tube and a copper tube according to an embodiment, which does not form part of the present invention.
Fig. 6 is a perspective view of a distributor according to an embodiment, which does not form part of the present invention.
Fig. 7 is a sectional view of an aluminum tube according to an embodiment, which does not form part of the present invention.

Hereinafter, embodiments will be described with reference to the accompanying drawings. However, the scope set forth are not limited to the embodiments presented herein. Other embodiments within the scope of the invention defined by the appended claims, may be well understood by one or ordinary skill in the art.

Air conditioners may include refrigerant tubes to circulate refrigerant, and distributors to distribute the refrigerant from one component to another in a refrigeration cycle. Copper refrigerant tubes may provide good reliability and thermal expansion characteristic. However, outdoor and indoor heat exchangers include many refrigerant tubes, and copper may be relatively expensive and heavy, consequently rendering such air conditioners heavy and expensive.

Heat exchangers may also include heat dissipating fins coupled to the refrigerant tubes for facilitating heat exchange between refrigerant in the tubes and external air. Such heat dissipating fins may be formed of aluminum that, which is light and has good thermal conductivity. However, in such an arrangement, refrigerant tubes and heat dissipating fins would be formed of different metals, and thus the refrigerant tubes and/or heat dissipating fins may be subject to corrosion.

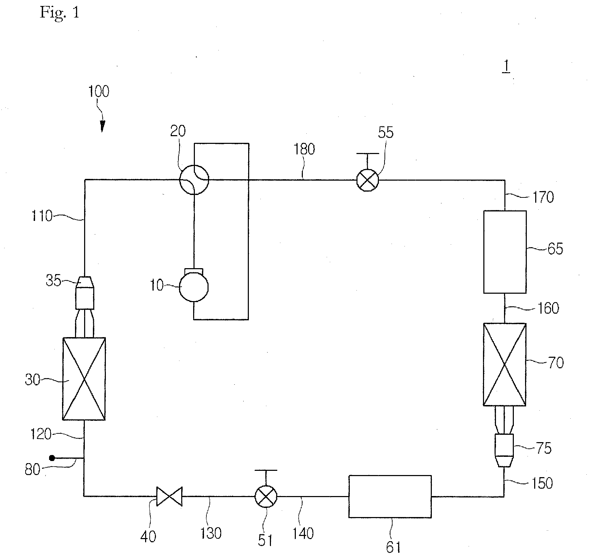

Fig. 1 is a schematic view of a refrigerant cycle of an air conditioner 1 as broadly described herein. In the following description, the terms "entrance side" and "exit side" are used based on a refrigerant flow direction.

Referring to Fig. 1, the air conditioner 1 includes a compressor 10, a flow switch 20, an outdoor heat exchanger 30, an expansion device 40, and an indoor heat exchanger 70. The compressor 10 compresses refrigerant. The flow switch 20 guides the refrigerant from the compressor 10 to the outdoor heat exchanger 30 or the indoor heat exchanger 70. The outdoor heat exchanger 30 may be provided in an outdoor area for heat exchange with outdoor air. The expansion device 40 may reduce the pressure of the refrigerant. The indoor heat exchanger 70 may be provided in an indoor area for heat exchange with indoor air.

The circulation direction of the refrigerant may be varied based on whether the air conditioner is operated in the cooling mode or the heating mode. In cooling mode, the refrigerant discharged from the compressor 10 flows through the outdoor heat exchanger 30, the expansion device 40, and the indoor heat exchanger 70, and then returns to the compressor 10. In this situation, the outdoor heat exchanger 30 functions as a condenser, and the indoor heat exchanger 70 functions as an evaporator.

In heating mode, the refrigerant discharged from the compressor 10 flows through the indoor heat exchanger 70, the expansion device 40, and the outdoor heat exchanger 30, and then returns to the compressor 10. In this situation, the indoor heat exchanger 70 functions as a condenser, and the outdoor heat exchanger 30 functions as an evaporator.

Hereinafter, an explanation will be provided of an exemplary case in which the air conditioner 1 is operated in cooling mode.

The air conditioner 1 includes refrigerant tubes 100 to guide refrigerant flow. The refrigerant tubes 100 may include a plurality tubes, such as first to eighth tubes 110, 120, 130, 140, 150, 160, 170 and 180.

The outdoor heat exchanger 30 and/or the indoor heat exchanger 70 includes fins (heat exchange fins) coupled to the refrigerant tubes 100 for facilitating heat transfer to or from the refrigerant. The refrigerant tubes 100 provided at the outdoor heat exchanger 30 and/or the indoor heat exchanger 70 are referred to as heat exchange tubes.

The refrigerant tubes 100 and the fins are formed of an aluminum material, so that the weight of the outdoor heat exchanger 30 and/or the indoor heat exchanger 70 may be reduced compared to a heat exchanger including a plurality of copper tubes.

In addition, since the refrigerant tubes 100 and the fins are formed of the same metal, the refrigerant tubes 100 and/or the fins may be protected from corrosion caused by a potential difference between dissimilar metals. Owing to this, the lifespan of the outdoor heat exchanger 30 and/or the indoor heat exchanger 70 may be increased, and power consumption may be reduced.

A first distributor 35 and the first tube 110 may be provided at an entrance side of the outdoor heat exchanger 30. The first distributor 35 may distribute refrigerant to a plurality of refrigerant tubes of the outdoor heat exchanger 30, and the first tube 110 may extend from the flow switch 20 to the first distributor 35. The refrigerant may be introduced into the outdoor heat exchanger 30 through the first distributor 35 and may be discharged from the outdoor heat exchanger 30 through the first distributor 35 after circulating through the outdoor heat exchanger 30.

In certain embodiments, the first distributor 35 may be formed of an aluminum material, and the first tube 110 may be formed of a copper material. In this case, the first distributor 35 formed of an aluminum material may be light, and the first tube 110 formed of a copper material may be less thermally expanded by the refrigerant discharged from the compressor 10 at a relatively high temperature.

The second tube 120 may extend from a discharge side of the outdoor heat exchanger 30 to the expansion device 40, and a refrigerant injector 80 may be disposed at the second tube 120 for injecting refrigerant in the air conditioner 1. The refrigerant injector 80 may include a predetermined tube.

The second tube 120 includes a tube formed of an aluminum material (hereinafter referred to as an aluminum tube), and a tube formed of a copper material (hereinafter referred to as a copper tube). Such a tube including aluminum and copper tubes is referred to as a combination tube, or a hybrid tube.

In certain embodiments, at least a portion of the second tube 120 may be formed of an aluminum material, and the remaining portion of the second tube 120 may be formed of a copper material. The aluminum tube and the copper tube are coupled to each other by a coupling tube as defined in claim 1.

Since the second tube 120 is a combination tube, or hybrid tube, the weight of the second tube 120 is reduced, and the quality of the second tube 120 may be improved owing to thermal conductivity or anti-corrosion characteristics of a copper material.

The refrigerant injector 80 may be disposed at the copper tube of the second tube 120. In an exemplary air conditioner, such a refrigerant may already be provided at a copper tube, i.e., at the second tube 120 without additional costs or processes.

A first service valve 51 and the third tube 130 may be provided at an exit side of the expansion device 40, with the third tube 130 extending from the expansion device 40 to the first service valve 51. The third tube 130 may include a copper tube and an aluminum tube.

A service valve may be used to inject refrigerant in an air conditioner when the air conditioner is first installed. Such a service valve may also be used to collect refrigerant from the air conditioner when the air conditioner is uninstalled. The exemplary air conditioner 1 shown in FIG. 1 includes the first service valve 51 and a second service valve 55. The refrigerant may flow from the outdoor heat exchanger 30 to an indoor unit (that is, the indoor heat exchanger 70) through the first service valve 51. In addition, the refrigerant may flow from the indoor unit to the compressor 10 through the second service valve 55.

The air conditioner 1 may include a plurality of connectors 61 and 65 for connecting an outdoor unit and the indoor unit. The outdoor unit may include the compressor 10, the outdoor heat exchanger 30, and the expansion device 40, and the indoor unit may include the indoor heat exchanger 70.

The connectors 61 and 65 may include a first connector 61 configured to connect refrigerant tubes between the outdoor heat exchanger 30 and the indoor heat exchanger 70, and a second connector 65 configured to connect refrigerant tubes between the outdoor heat exchanger 30 and the compressor 10.

The fourth tube 140 extends between the first service valve 51 and the first connector 61. Since the fourth tube 140 may be exposed to the outside, the fourth tube 140 may be formed of a copper tube having a low thermal deformation or expansion rate. Similarly, the seventh tube 170 extending between the second connector 65 and the second service valve 55 may be a copper tube.

A second distributor 75 is disposed at a side of the indoor heat exchanger 70 to distribute the refrigerant discharged from the expansion device 40 to a plurality of refrigerant tubes of the indoor heat exchanger 70. The refrigerant may be introduced into the indoor heat exchanger 70 through the second distributor 75 and discharged from the indoor heat exchanger 70 through the second distributor 75.

The fifth tube 150 extends between the first connector 61 and the second distributor 75, and the sixth tube 160 extends between the indoor heat exchanger 70 and the second connector 65. At least one of the fifth tube 150 or the sixth tube 160 may be a combination tube.

The eighth tube 180 extends between the second service valve 55 and the flow switch 20. The eighth tube 180 may be a copper tube or an aluminum tube.

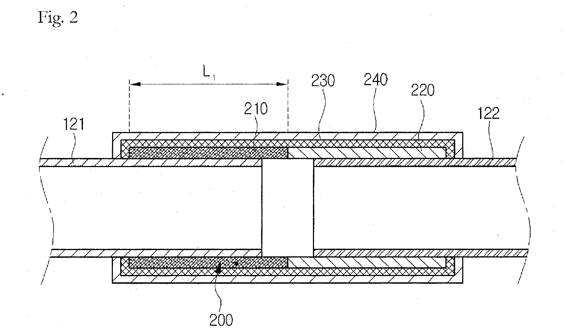

Fig. 2 is a sectional view of a coupled state of an aluminum tube and a copper tube according to the present invention. With reference to Fig. 2, the second tube 120 will be explained as an exemplary combination tube of the invention.

The second tube 120 includes an aluminum tube 121, a copper tube 122, and a coupling tube 200. The coupling tube 200 is a separate tube for coupling the aluminum tube 121 and the copper tube 122. The aluminum tube 121 and the copper tube 122 are inserted in the coupling tube 200.

The coupling tube 200 includes a first metal part 210 and a second metal part 220 which are formed of different metal materials. At least a portion of the coupling tube 200 is formed of the first metal part 210, and the other portion of the coupling tube 200 is formed of the second metal part 220. The first metal part 210 is formed of aluminum, and the second metal part 220 is formed of copper.

The first metal part 210 makes contact with the aluminum tube 121, and the second metal part 220 makes contact with the copper tube 122. That is, the aluminum tube 121 makes contact with the first metal part 210 formed of an aluminum material, and the copper tube 122 makes contact with the second metal part 220 formed of a copper material.

Generally, if different kinds of metals contact each other, the metals may be subject to corrosion in certain environments due to a potential difference between the metals. The potential of a metal having high ionization tendency is relatively low. Therefore, if a metal having a low potential makes contact with a metal having a high potential, the metal having a low potential is corroded. A potential of aluminum is lower than that of copper.

However, according to the first embodiment which belongs to the present invention, when the aluminum tube 121 and the copper tube 122 are coupled to each other by the coupling tube 200, since the same kinds of metals contact each other, corrosion caused by a potential difference between different metals may be reduced.

The first metal part 210 making contact with the aluminum tube 121 may have a preset length L1. Since the corrosion resistance of aluminum is lower than that of copper, the first metal part 210 disposed around the aluminum tube 121 may have a length that is sufficient to delay breakage of the first metal part 210. The length L1 may be, for example, 30 mm or greater.

The aluminum tube 121 and the copper tube 122 are inserted in the coupling tube 200, ends of the aluminum tube 121 and the copper tube 122 are spaced apart from each other, as shown in FIG. 2. That is, since the aluminum tube 121 and the copper tube 122 are not in contact with each other, corrosion caused by a potential difference between different metals may be prevented.

A seal 240 is provided around the coupling tube 200 to protect the coupling tube 200, the aluminum tube 121, and the copper tube 122 from moisture or water, and an adhesive layer 230 is provided between the seal 240 and the coupling tube 200.

If a certain amount of heat is supplied to the adhesive layer 230, the adhesive layer 230 may be fixed between the seal 240 and the coupling tube 200. The seal 240 may be, for example, a tube, tape, or a member formed of a solidified liquid material.

A method of manufacturing the combination tube will now be explained.

The aluminum tube 121 and the copper tube 122 are inserted in the coupling tube 200. Next, an adhesive is placed around the coupling tube 200, and then the seal 240 is positioned around the coupling tube 200.

Thereafter, heat may be supplied to the adhesive and the seal 240, causing the seal 240 to shrink inward to press the coupling tube 200 toward the aluminum tube 121 and the copper tube 122.

In this way, the aluminum tube 121, the copper tube 122, the coupling tube 200, and the seal 240 are reliably sealed to prevent permeation of moisture and corrosion.

Hereinafter, second to fourth embodiments will be described, which do not form part of the present invention. Differences with the foregoing embodiment will be mainly described, and the same or similar elements as those of the first embodiment will be denoted by the same reference numerals where appropriate.

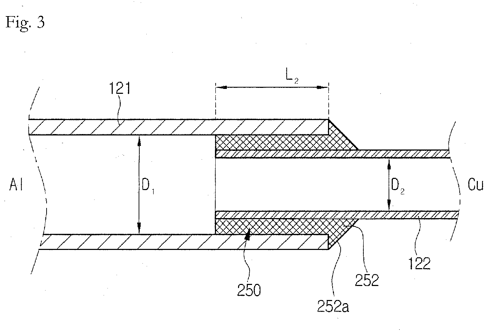

Referring to Fig. 3, according to the second embodiment, an aluminum tube 121 and a copper tube 122 may be coupled without an additional member such as the coupling tube 200 shown in FIG. 2.

In detail, a tube joint may include the aluminum tube 121 having a predetermined inner diameter D1, the copper tube 122 having an inner diameter D2 smaller than the inner diameter D1 and inserted in the aluminum tube 121, and a welding layer 250 provided in an area between the inserted portion of the copper tube 122 and a corresponding portion of the aluminum tube 121.

Since the aluminum tube 121 is disposed around the copper tube 122, although the aluminum tube 121 and the copper tube 122 could react with each other due to a potential difference and corrode the aluminum tube 121, the tube joint may instead be damaged from the outside of the tube joint, and thus refrigerant flowing in the tube joint may not be affected, and leakage of the refrigerant may be prevented.

On the other hand, if the aluminum tube 121 is disposed in the copper tube 122, the tube joint may be damaged from the inside of the tube joint due to corrosion of the aluminum tube 121. Thus, refrigerant flowing in the tube joint may be affected and may leak.

Therefore, in the current embodiment, the aluminum tube 121 is disposed around the copper tube 122. That is, the copper tube 122 is inserted in the aluminum tube 121.

The copper tube 122 is inserted in the aluminum tube 121 by a length L2. That is, the length of the inserted portion of the copper tube 122 measured from an end of the aluminum tube 121 is L2 such that the aluminum tube 121 and the copper tube 122 overlap by a length L2, separated by the welding layer 250 . The length L2 may be, for example, 9 mm or greater.

The welding layer 250 is disposed between the inner surface of the aluminum tube 121 and the outer surface of the copper tube 122 at a position corresponding to the length L2.

The welding layer 250 may be formed of a welding material applied with heat. A potential of the welding material may be lower than that of aluminum or copper. That is, the ionization tendency of the welding material may be higher than that of aluminum or copper. Therefore, if the aluminum tube 121, the copper tube 122, and the welding layer 250 react with each other due to a potential difference, the welding layer 250 is corroded.

By sufficiently increasing the insertion length L2 of the copper tube 122 and disposing the welding layer 250 between the aluminum tube 121 and the copper tube 122, corrosion or breakage of the aluminum tube 121 and the copper tube 122 may be prevented, even though the welding layer 250 may be corroded.

The welding layer 250 may include a protrusion 252 to cover the end of the aluminum tube 121. The protrusion 252 may include a slope 252a extending from the end of the aluminum tube 121 to the outer surface of the copper tube 122.

Since the protrusion 252 of the welding layer 250 is disposed between the end of the aluminum tube 121 and the outer surface of the copper tube 122, corrosion of the aluminum tube 121 may be avoided.

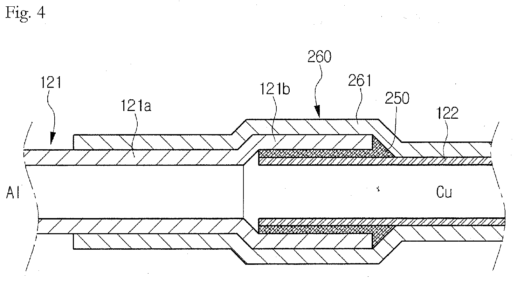

Fig. 4 is a sectional view of a coupled state of an aluminum tube and a copper tube according to a third embodiment. In the third embodiment, an aluminum tube and a copper tube are directly coupled to form a tube joint.

Referring to Fig. 3, according to the third embodiment, an aluminum tube 121 may include a tube main body 121a and an enlarged tube portion 121b. The tube main body 121a forms a refrigerant flow passage. The enlarged tube portion 121b is formed on an end of the tube main body 121a and has an inner diameter greater than that of the tube main body 121a.

A copper tube 122 is inserted in the enlarged tube portion 121b. A welding layer 250 is disposed between the enlarged tube portion 121b and an inserted portion of the copper tube 122. That is, the enlarged tube portion 121b of the aluminum tube 121 functions as a coupling portion for the tube joint.

The inner diameter of the tube main body 121a is approximately equal to the inner diameter of the copper tube 122. Therefore, when the aluminum tube 121 and the copper tube 122 are coupled, the inner surface of the tube joint may be substantially smooth without a stepped portion to reduce flow resistance when a refrigerant flows in the tube joint.

A cover 260 may be disposed around the aluminum tube 121 to prevent permeation of humidity or moisture into the tube joint. In a state where the aluminum tube 121 and the copper tube 122 are coupled to each other, the cover 260 surrounds the aluminum tube 121 and the copper tube 122. The cover 260 may include a cover enlarged portion 261.

In the current embodiment, at the tube joint, the aluminum tube 121 is disposed around the copper tube 122 as described in the second embodiment. Therefore, breakage of the tube joint may be prevented, and refrigerant leakage may be prevented.

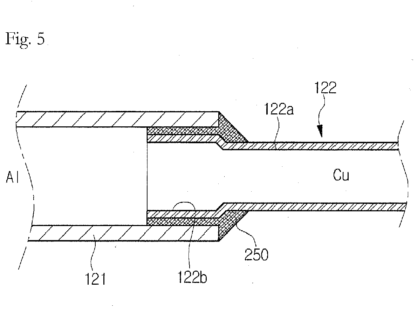

Fig. 5 is a sectional view of a coupled state of an aluminum tube and a copper tube according to a fourth embodiment.

Referring to Fig. 5, according to the fourth embodiment, a copper tube 122 includes a tube main body 122a and an enlarged tube portion 122b. The tube main body 122a forms a refrigerant flow passage. The enlarged tube portion 122b is formed on an end of the tube main body 122a for coupling with the aluminum tube 121. That is, the enlarged tube portion 122b functions as a coupling portion.

A welding layer 250 is disposed between an end part of the aluminum tube 121 and the enlarged tube portion 122b. A cover such as, for example, the cover 260 shown in FIG. 4, may be used in the current embodiment.

In the current embodiment, at the tube joint, the aluminum tube 121 is disposed around the copper tube 122 as described in the previous embodiments. Therefore, breakage of the tube joint may be prevented, and refrigerant leakage may be prevented.

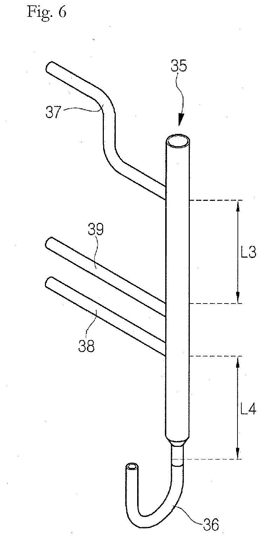

Fig. 6 is a perspective view illustrating tubing of a distributor 35 (see also, FIG. 1) according to an embodiment which does not form part of the present invention, as broadly described herein.

Referring to Fig. 6, the distributor 35 may include a first inlet/outlet tube 36, a second inlet/outlet tube 37, a first branch tube 38, and a second branch tube 39. Refrigerant is introduced into the distributor 35 through the first and second inlet/outlet tubes 36 and 37 and is discharged from the distributor 35 through the first and second inlet/outlet tubes 36 and 37. Refrigerant is distributed to the outdoor heat exchanger 30 or the indoor heat exchanger 70 from the distributor 35 through the first and second branch tubes 38 and 39.

The first and second inlet/outlet tubes 36 and 37 and the first and second branch tubes 38 and 39 may be coupled to the distributor 35 by welding. The first and second inlet/outlet tubes 36 and 37 and the first and second branch tubes 38 and 39 may be formed of different metal materials, and/or may be combination/hybrid tubes as previously discussed.

In one exemplary embodiment which does not form part of the present invention, the distributor 35 may be formed of an aluminum material. The first and second inlet/outlet tubes 36 and 37 may be formed of copper, and the first and second branch tubes 38 and 39 may be formed of aluminum. Alternatively, the first and second inlet/outlet tubes 36 and 37 may be formed of aluminum, and the first and second branch tubes 38 and 39 may be formed of copper.

In this way, if refrigerant tubes formed of different metals are coupled to the distributor 35 at neighboring positions, the neighboring refrigerant tubes formed of different metals may be spaced by predetermined distances L3, L4.

If tubes formed of different metals are welded, welding errors may occur due to different melting points of the different metals. That is, the distances L3 and L4 may be considered as minimum distances for preventing welding errors. The distances L3 and L4 may be, for example, 30 mm or greater.

In other words, different kinds of refrigerant tubes may be welded to the distributor 35 at positions spaced apart from each other by a predetermined length or more to provide for acceptable welding quality.

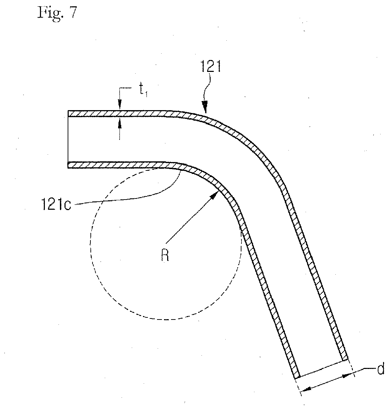

Fig. 7 is a cross-sectional view of a bent state of an aluminum tube according to an embodiment which does not form part of the present invention. A refrigerant tube may be bent or rounded to properly/efficiently position the refrigerant tube in an air conditioner.

Referring to Fig. 7, according to the embodiment, an aluminum tube 121 may include a bent portion 121c. The bent portion 121c may be rounded with a predetermined radius of curvature R.

In certain instances, the aluminum tube 121 may be damaged due to accumulation of fatigue. To prevent this, the radius of curvature R and thickness t1 of the aluminum tube 121 may be established to prevent such damage.

For example, in certain embodiments which do not form part of the present invention, the radius of curvature R of the aluminum tube 121 may be greater than twice the diameter d of the aluminum tube 121, and the thickness t1 of the aluminum tube 121 may be greater than 0.1 times the diameter d of the aluminum tube 121 (t1>0.1*d). In this case, the fatigue lifespan of the aluminum tube 121 may be 10 years or longer.

For the embodiments as broadly described herein, which do not form part of the present invention, the refrigerant tube connecting one component to another component in refrigerant cycle may be formed of aluminum. Therefore, the weight and manufacturing cost of the air conditioner may be reduced. Since the weight of the air conditioner is reduced, the air conditioner (particularly, the outdoor unit of the air conditioner) may be easily installed and stably reinstalled.

In addition, since the refrigerant tube and the fin of the heat exchanger are formed of aluminum, corrosion caused by a potential difference between different kinds of metals is prevented.

In addition, since aluminum may be recycled, the air conditioner may be recycled or reused for other purposes.

In addition, since the refrigerant tube is a combination tube including aluminum and copper materials, the weight of the refrigerant tube is reduced, and the quality of the refrigerant tube is improved owing to thermal conductivity and/or anti-corrosion characteristics of copper.

In addition, since aluminum and copper materials may be firmly combined by welding or using a coupling tube, coupling and anti-corrosion characteristics of the refrigerant tube may be improved, and the lifespan of the refrigerant tube may be increased.

In addition, welding errors caused by different melting points of aluminum and copper materials may be prevented by spacing a welding portion of aluminum materials away from a welding portion for aluminum and copper materials.

Furthermore, when it is necessary to bend an aluminum refrigerant tube, the radius of curvature and/or thickness of the aluminum refrigerant tube may be selected in consideration of fatigue characteristics of aluminum. Thus, the lifespan of the aluminum refrigerant tube may be increased.

According to the embodiments as broadly described herein, owing to the refrigerant tubes formed of aluminum, the weight and manufacturing costs of the air conditioner is reduced. Therefore, the air conditioner may be applied to various industrial fields.

Embodiments as broadly described herein provide an air conditioner that may be easily installed and which may be manufactured at a relatively low cost.

In one embodiment which does not form part of the present invention, an air conditioner as embodied and broadly described herein may include a compressor configured to compress a refrigerant; a condenser at which the refrigerant discharged from the compressor exchanges heat; an expansion device configured to decompress the refrigerant after the refrigerant passing through the condenser; and an evaporator at which the refrigerant decompressed by the expansion device exchanges heat, wherein the condenser or the evaporator includes: a heat exchange tube formed of an aluminum material and allowing the refrigerant to flow therein; and a heat dissipating fin connected to the heat exchange tube, the heat dissipating fin being formed of the same metal material used to form the heat exchange tube for preventing corrosion of the heat exchange tube caused by a potential difference.

In another embodiment which does not form part of the present invention, an air conditioner as embodied and broadly described herein may include a refrigerant tube connecting a plurality of components in refrigerant cycle to guide a flow of refrigerant; and an heat exchanger including a heat exchange tube and a heat dissipating fin, the heat exchange tube being defined by at least a portion of the refrigerant tube, the heat dissipating fin being formed of the same metal material as that used to form the heat exchange tube, wherein at least a portion of the refrigerant tube includes an aluminum tube.

When a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the appended claims. In addition to variations and modifications in the component parts and/or arrangements, alternative uses will also be apparent to those skilled in the art.

## Claims

1. An air conditioner, comprising:
a compressor (10) configured to compress refrigerant;
a condenser (30) configured to perform exchange heat with refrigerant received from the compressor (10);
an expansion device (40) configured to decompress refrigerant passing through the condenser (30);
an evaporator (70) configured to perform heat exchange with refrigerant decompressed by the expansion device (40), wherein at least one of the condenser (30) or the evaporator (70) comprises:
at least one heat exchange tube formed of an aluminum material and configured to guide refrigerant therethrough; and
at least one fin coupled to the at least one heat exchange tube, the at least one fin being formed of the same material as that of the heat exchange tube; and
a plurality of refrigerant tubes (100) connecting the compressor (10), the condenser (30), the expansion device (40) and the evaporator (70) to guide refrigerant therebetween, wherein at least one of the plurality of refrigerant tubes (100) comprising a combination tube in which an aluminum tube (121) and a copper tube (122) are coupled and the aluminum tube (121) and the copper tube (122) are aligned end to end with a space formed between corresponding ends;
**characterised by** a coupling tube (200) that couples the aluminum tube (121) and the copper tube (122) and into which the aluminum tube (121) and the copper tube (122) are inserted, the coupling tube (200) comprising a first metal tube (210) formed of the same material as that of the aluminum tube (121), and a second metal tube (220) formed of the same material as that of the copper tube (122);
a seal (240) that surrounds the first and second metal tubes; and
an adhesive layer (230) provided between the first and second metal tubes and the seal (240),
wherein the first metal tube surrounds the aluminum tube (121) and does not directly contact the copper tube (122), and the second metal tube surrounds the copper tube (122) and does not directly contact the aluminum tube (121).

2. The air conditioner according to claim 1, further comprising a plurality of connectors (61, 65) provided between the condenser (30) and the evaporator (70), wherein refrigerant tubes (100) connecting the evaporator (70) and the plurality of connectors (61, 65) are combination tubes in which the aluminum tube and the copper tube are coupled.

3. The air conditioner of claim 2, further comprising:
a service valve (51, 55) that guides refrigerant from the expansion device (40) to the evaporator (70) or that guides refrigerant from the evaporator (70) to the compressor (10); and
a copper tube connected between the service valve (51, 55) and one of the plurality of connectors (61, 65).

4. The air conditioner of any one of claims 1 to 3, wherein one of the plurality of refrigerant tubes (100) extends between the condenser (30) and the expansion device (40), and wherein the refrigerant tube (100) extending between the condenser (30) and the expansion device (40) is a combination tube.

5. The air conditioner of claim 4, further comprising a refrigerant injector (80) that injects refrigerant into the plurality of refrigerant tubes (100), wherein the refrigerant injector (80) is provided at the copper tube (122) of the combination tube.

6. The air conditioner of any one of claims 1 to 5, further comprising a distributor (35) provided at the condenser (30) or the evaporator (70) to distribute refrigerant to the corresponding at least one heat exchange tube, wherein the distributor (35) is formed of an aluminum material.

## Patentansprüche

1. Klimaanlage, mit:
einem Verdichter (10), der konfiguriert ist, ein Kältemittel zu verdichten;
einem Kondensator (30), der konfiguriert ist, einen Wärmetausch mit aus dem Verdichter (10) aufgenommenem Kältemittel durchzuführen;
einer Expansionsvorrichtung (40), die konfiguriert ist, durch den Kondensator (30) strömendes Kältemittel zu entspannen;
einem Verdampfer (70), der konfiguriert ist, einen Wärmetausch mit dem durch die Expansionsvorrichtung (40) entspannten Kältemittel durchzuführen, wobei der Kondensator (30) und/oder der Verdampfer (70) aufweist:
mindestens eine Wärmetauschröhre, die aus einem Aluminiummaterial ausgebildet und konfiguriert ist, Kältemittel hindurchzuleiten; und
mindestens eine Rippe, die mit der mindestens einen Wärmetauschröhre gekoppelt ist, wobei die mindestens eine Rippe aus dem gleichen Material wie die Wärmetauschröhre ausgebildet ist; und
mehrere Kältemittelröhren (100), die den Verdichter (10), den Kondensator (30), die Expansionsvorrichtung (40) und den Verdampfer (70) verbinden, um Kältemittel dazwischen zu leiten, wobei mindestens eine der mehreren Kältemittelröhren (100) eine Kombinationsröhre aufweist, in der eine Aluminiumröhre (121) und eine Kupferröhre (122) gekoppelt sind, und die Aluminiumröhre (121) und die Kupferröhre (122) Ende an Ende ausgerichtet sind mit einem zwischen entsprechenden Enden ausgebildeten Raum;
**gekennzeichnet durch**
eine Kopplungsröhre (200), die die Aluminiumröhre (121) und die Kupferröhre (122) koppelt und in die die Aluminiumröhre (121) und die Kupferröhre (122) eingesetzt sind, wobei die Kopplungsröhre (200) eine erste Metallröhre (210), die aus dem gleichen Material wie die Aluminiumröhre (121) ausgebildet ist, und eine zweite Metallröhre (220) aufweist, die aus dem gleichen Material wie die Kupferröhre (122) ausgebildet ist;
eine Dichtung (240), die die erste und die zweite Metallröhre umgibt; und
eine Klebstoffschicht (230), die zwischen der ersten und zweiten Metallröhre und der Dichtung (240) vorgesehen ist,
wobei die erste Metallröhre die Aluminiumröhre (121) umgibt und die Kupferröhre (122), nicht direkt berührt und die zweite Metallröhre die Kupferröhre (122) umgibt und die Aluminiumröhre (121) nicht direkt berührt.

2. Klimaanlage nach Anspruch 1, die ferner mehrere Verbinder (61, 65) aufweist, die zwischen dem Kondensator (30) und dem Verdampfer (70) vorgesehen sind, wobei die Kältemittelröhren (100), die den Verdampfer (70) und die mehreren Verbinder (61, 65) verbinden, Kombinationsröhren sind, in denen die Aluminiumröhre und die Kupferröhre gekoppelt sind.

3. Klimaanlage nach Anspruch 2, die ferner aufweist:
ein Serviceventil (51, 55) das Kältemittel von der Expansionsvorrichtung (40) zum Verdampfer (70) leitet oder das Kältemittel vom Verdampfer (70) zum Verdichter (10) leitet; und
eine Kupferröhre, die zwischen das Serviceventil (51, 55) und einen der mehreren Verbinder (61, 65) angeschlossen ist.

4. Klimaanlage nach einem der Ansprüche 1 bis 3, wobei sich eine der mehreren Kältemittelröhren (100) zwischen dem Kondensator (30) und der Expansionsvorrichtung (40) erstreckt, und wobei die Kältemittelröhre (100), die sich zwischen dem Kondensator (30) und der Expansionsvorrichtung (40) erstreckt, eine Kombinationsröhre ist.

5. Klimaanlage nach Anspruch 4, die ferner einen Kältemittelinjektor (80) aufweist, welcher Kältemittel in die mehreren Kältemittelröhren (100) einspritzt, wobei der Kältemittelinjektor (80) an der Kupferröhre (122) der Kombinationsröhre vorgesehen ist.

6. Klimaanlage nach einem der Ansprüche 1 bis 5, die ferner einen Verteiler (35) aufweist, der am Kondensator (30) oder am Verdampfer (70) vorgesehen ist, um Kältemittel zu der entsprechenden mindestens einen Wärmetauschröhre zu verteilen, wobei der Verteiler (35) aus einem Aluminiummaterial ausgebildet ist.

## Revendications

1. Climatiseur, comprenant :
un compresseur (10) prévu pour comprimer un réfrigérant ;
un condensateur (30) prévu pour effectuer un échange de chaleur avec le réfrigérant reçu du compresseur (10) ;
un dispositif de détente (40) prévu pour détendre le réfrigérant passant par le condensateur (30) ;
un évaporateur (70) prévu pour effectuer un échange de chaleur avec le réfrigérant détendu par le dispositif de détente (40), le condensateur (30) et/ou l'évaporateur (70) comprenant :
au moins un tuyau d'échange de chaleur constitué d'aluminium et prévu pour conduire le réfrigérant ; et
au moins une ailette raccordée audit au moins un tuyau d'échange de chaleur, ladite au moins une ailette étant constituée du même matériau que le tuyau d'échange de chaleur ; et
une pluralité de tuyaux de réfrigérant (100) reliant le compresseur (10), le condensateur (30), le dispositif de détente (40) et l'évaporateur (70) pour conduire le réfrigérant entre ceux-ci, où au moins un tuyau de la pluralité de tuyaux de réfrigérant (100) comprenant un tuyau combiné où un tuyau en aluminium (121) et un tuyau en cuivre (122) sont accouplés, et le tuyau en aluminium (121) et le tuyau en cuivre (122) sont alignées bout-à-bout, un espace étant formé entre extrémités correspondantes ;
**caractérisé par**
un tuyau de raccord (200) accouplant le tuyau en aluminium (121) et le tuyau en cuivre (122) et dans lequel le tuyau en aluminium (121) et le tuyau en cuivre (122) sont insérés, ledit tuyau de raccord (200) comprenant un premier tuyau métallique (210) constitué du même matériau que le tuyau en aluminium (121), et un deuxième tuyau métallique (220) constitué du même matériau que le tuyau en cuivre (122) ;
un joint (240) entourant le premier et le deuxième tuyaux métalliques ; et
une couche adhésive (230) prévue entre le premier et le deuxième tuyaux métalliques et le joint (240),
le premier tuyau métallique entourant le tuyau en aluminium (121) et n'étant pas en contact direct avec le tuyau en cuivre (122), et le deuxième tuyau métallique entourant le tuyau en cuivre (122) et n'étant pas en contact direct avec le tuyau en aluminium (121).

2. Climatiseur selon la revendication 1, comprenant en outre une pluralité de connecteurs (61, 65) prévus entre le condensateur (30) et l'évaporateur (70), les tuyaux de réfrigérant (100) reliant l'évaporateur (70) et la pluralité de connecteurs (61, 65) étant des tuyaux combinés où le tuyau en aluminium et le tuyau en cuivre sont accouplés.

3. Climatiseur selon la revendication 2, comprenant en outre :
une vanne de service (51, 55) guidant le réfrigérant du dispositif de détente (40) vers l'évaporateur (70) ou guidant le réfrigérant de l'évaporateur (70) vers le compresseur (10) ; et
un tuyau en cuivre reliant la vanne de service (51, 55) et un connecteur de la pluralité de connecteurs (61, 65).

4. Climatiseur selon l'une des revendications 1 à 3, où un tuyau de la pluralité de tuyaux de réfrigérant (100) s'étend entre le condensateur (30) et le dispositif de détente (40), et où ledit tuyau de réfrigérant (100) s'étendant entre le condensateur (30) et le dispositif de détente (40) est un tuyau combiné.

5. Climatiseur selon la revendication 4, comprenant en outre un injecteur de réfrigérant (80) injectant du réfrigérant dans la pluralité de tuyaux de réfrigérant (100), ledit injecteur de réfrigérant (80) étant prévu sur le tuyau en cuivre (122) du tuyau combiné.

6. Climatiseur selon l'une des revendications 1 à 5, comprenant en outre un distributeur (35) prévu sur le condensateur (30) ou l'évaporateur (70) pour distribuer le réfrigérant to vers ledit au moins un tuyau d'échange de chaleur correspondant, ledit distributeur (35) étant constitué d'aluminium.
